# EUROPEAN PATENT APPLICATION

(11) **EP 4 654 728 A1**
(43) Date of publication of application: **26.11.2025**
(21) Application number: 23933480.8
(22) Date of filing: 20.04.2023
(51) Int. Cl.: H04W 74/08

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: MA, Teng, Dongguan, Guangdong 523860 (CN); WANG, Hao, Dongguan, Guangdong 523860 (CN); ZHANG, Shichang, Dongguan, Guangdong 523860 (CN)
(74) Representative: Mewburn Ellis LLP
(86) International application number: PCT/CN2023/089612
(87) International publication number: WO 2024/216604

(57) **Abstract**

A communication method and device are provided in embodiments of the disclosure. The communication method includes the following. A first terminal receives request information of first channel occupancy time (COT) from a second terminal. The first terminal transmits first response information to the second terminal, where the first response information includes first acknowledgement information and/or second acknowledgement information. The first acknowledgement information indicates or acknowledges that the first terminal is to initiate the first COT, and the second acknowledgement information indicates or acknowledges that the first terminal is not to initiate the first COT. According to embodiments of the disclosure, power consumption during channel access can be reduced.

## Description

### TECHNICAL FIELD

This disclosure relates to the field of communication, and more specifically to a communication method and device.

### BACKGROUND

In the related art, when terminals operate on a sidelink in a license-free frequency band, all the terminals need to perform different types of listen-before-talk (LBT) before transmission of sidelink data, and can smoothly access a channel for sidelink transmission only in the case where LBT succeeds. When no channel occupancy time (COT) exists, the terminals need to perform Type 1 LBT, and can initiate COT only after the Type 1 LBT succeeds. Other terminals satisfying a condition may also share resources in the COT, and adopt Type 2 LBT. In the related art, whether a terminal initiates COT is determined according to whether the terminal has data to be transmitted and whether Type 1 LBT succeeds, and it is not supported that a terminal requests another terminal to initiate COT for use by the terminal.

A sidelink unlicensed (SL-U) technology can be deployed in commercial scenarios such as a wearable smart device, smart home, and industrial Internet. Since the cost and power consumption of a terminal device are important measurement indicators in the commercial deployment, from the perspective of low power consumption, how to achieve energy saving at an SL-U reduced-capability (RedCap) user equipment (UE) is a problem to be studied.

When an SL-U terminal operates in an unlicensed frequency band, the terminal first needs to perform LBT before data transmission. To access a channel, a RedCap UE needs to contiguously perform channel sensing for a long duration, which leads to high power consumption. Therefore, how to achieve energy saving during channel access is a problem to be studied.

### SUMMARY

A communication method and device are provided in embodiments of the disclosure, which can reduce power consumption during channel access.

A communication method is provided in embodiments of the disclosure. The method includes the following. A first terminal receives request information of first channel occupancy time (COT) from a second terminal. The first terminal transmits first response information to the second terminal, where the first response information includes first acknowledgement information and/or second acknowledgement information. The first acknowledgement information indicates or acknowledges that the first terminal is to initiate the first COT, and the second acknowledgement information indicates or acknowledges that the first terminal is not to initiate the first COT.

A communication method is further provided in embodiments of the disclosure. The method includes the following. A second terminal transmits request information of first COT to a first terminal. The second terminal receives first response information from the first terminal, where The first response information includes first acknowledgement information and/or second acknowledgement information. The first acknowledgement information indicates or acknowledges that the first terminal is to initiate the first COT, and the second acknowledgement information indicates or acknowledges that the first terminal is not to initiate the first COT.

A first terminal is further provided in embodiments of the disclosure. The first terminal a first receiving module and a first transmitting module. The first receiving module is configured to receive request information of first COT from a second terminal. The first transmitting module is configured to transmit first response information to the second terminal, where the first response information includes first acknowledgement information and/or second acknowledgement information. The first acknowledgement information indicates or acknowledges that the first terminal is to initiate the first COT, and the second acknowledgement information indicates or acknowledges that the first terminal is not to initiate the first COT.

A second terminal is further provided in embodiments of the disclosure. The second terminal a second transmitting module and a second receiving module. The second transmitting module is configured to transmit request information of first COT to a first terminal. The second receiving module is configured to receive first response information from the first terminal, where the first response information includes first acknowledgement information and/or second acknowledgement information. The first acknowledgement information indicates or acknowledges that the first terminal is to initiate the first COT, and the second acknowledgement information indicates or acknowledges that the first terminal is not to initiate the first COT.

A communication device is further provided in embodiments of the disclosure. The communication device includes a processor, a memory, and a transceiver. The memory is configured to store a computer program. The processor is configured to invoke and execute the computer program stored in the memory, and control the transceiver to cause the device to perform the above method.

A chip is further provided in embodiments of the disclosure. The chip is configured to implement the above method.

Specifically, the chip includes a processor. The processor is configured to invoke and execute a computer program stored in a memory, to cause a device equipped with the chip to perform the above method.

A computer-readable storage medium is further provided in embodiments of the disclosure. The computer-readable storage medium is configured to store a computer program which, when executed by a device, causes the device to perform the above method.

A computer program product is further provided in embodiments of the disclosure. The computer program product includes computer program instructions which cause a computer to perform the above method.

A computer program is further provided in embodiments of the disclosure. The computer program, when executed by a computer, causes the computer to perform the above method.

In embodiments of the disclosure, after receiving request information of first COT from a second terminal, a first terminal may initiate COT. The COT can be intended for use by another terminal at least including the second terminal, thereby reducing power consumption generated during channel access by the another terminal.

### BRIEF DESCRIPTION OF THE DRAWINGS

FIG. 1 is a schematic diagram of an application scenario according to embodiments of the disclosure.
FIG. 2A is a schematic diagram illustrating in-coverage sidelink communication.
FIG. 2B is a schematic diagram illustrating partial-coverage sidelink communication.
FIG. 2C is a schematic diagram illustrating out-of-coverage sidelink communication.
FIG. 2D is a schematic diagram illustrating sidelink communication with the existence of a central control node.
FIG. 3A is a schematic diagram illustrating unicast transmission in new radio vehicle-to-everything (NR-V2X).
FIG. 3B is a schematic diagram illustrating multicast transmission in NR-V2X.
FIG. 3C is a schematic diagram illustrating broadcast transmission in NR-V2X.
FIG. 4 is a schematic diagram illustrating channel occupancy time (COT) obtained by a communication device after succeeding in listen-before-talk (LBT) on a channel in an unlicensed spectrum, and signal transmission by the communication device using resources in the COT.
FIG. 5 is a schematic flowchart of a communication method 500 according to embodiments of the disclosure.
FIG. 6 is a schematic diagram of a first embodiment of the disclosure.
FIGs. 7A to 7E are schematic diagrams of a second embodiment of the disclosure.
FIG. 8A is a first schematic diagram of a third embodiment of the disclosure.
FIG. 8B is a second schematic diagram of a third embodiment of the disclosure.
FIG. 9A is a first schematic diagram of a fourth embodiment of the disclosure.
FIG. 9B is a second schematic diagram of a fourth embodiment of the disclosure.
FIG. 10 is a schematic flowchart of a communication method 1000 according to embodiments of the disclosure.
FIG. 11 is a schematic structural diagram of a first terminal 1100 according to embodiments of the disclosure.
FIG. 12 is a schematic structural diagram of a first terminal 1200 according to embodiments of the disclosure.
FIG. 13 is a schematic structural diagram of a second terminal 1300 according to embodiments of the disclosure.
FIG. 14 is a schematic structural diagram of a second terminal 1400 according to embodiments of the disclosure.
FIG. 15 is a schematic structural diagram of a communication device 1500 according to embodiments of the disclosure.
FIG. 16 is a schematic structural diagram of a chip 1600 according to embodiments of the disclosure.

### DETAILED DESCRIPTION

The following will describe technical solutions of embodiments of the disclosure with reference to the accompanying drawings in embodiments of the disclosure.

It may be noted that, the terms "first", "second", and the like used in the specification, the claims, and the accompany drawings of embodiments of the disclosure are used to distinguish similar objects rather than describe a particular order or sequence. Objects described by "first" and "second" may be the same or different.

The technical solutions of the embodiments of the disclosure may be applied to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th generation (5G) system, or other communication systems.

Generally speaking, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, vehicle-to-everything (V2X) communication, or the like. Embodiments of the disclosure can also be applied to these communication systems.

In an embodiment, a communication system in embodiments of the disclosure may be applied to a carrier aggregation (CA) scenario, a dual connectivity (DC) scenario, or a standalone (SA) network deployment scenario.

In an embodiment, the communication system in embodiments of the disclosure may be applied to an unlicensed spectrum, and the unlicensed spectrum may be regarded as a shared spectrum. Alternatively, the communication system in embodiments of the disclosure may be applied to a licensed spectrum, and the licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, and the like.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device or other processing device connected to a wireless modem, an in-vehicle device, a wearable device, and a terminal device in a next-generation communication system, for example, a terminal device in an NR network, or a terminal device in a future evolved public land mobile network (PLMN), and the like.

In embodiments of the disclosure, the terminal device can be deployed on land, which includes indoor or outdoor, handheld, wearable, or in-vehicle. The terminal device can also be deployed on water (such as ships, and the like). The terminal device can also be deployed in the air (such as airplanes, balloons, satellites, and the like).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, or the like.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, a base transceiver station (BTS) in GSM or CDMA, or may be a node B (NB) in WCDMA, or may be an evolutional node B (eNB or eNodeB) in LTE, or a relay station or an AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

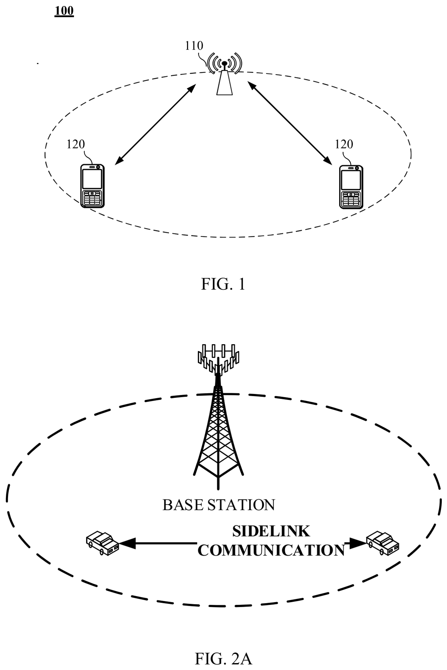

FIG. 1 exemplarily illustrates a communication system 100. The communication system 100 includes one network device 110 and two terminal devices 120. In an embodiment, the communication system 100 may include multiple network devices 110, and there can be other quantities of terminal devices 120 in a coverage area of each of the network devices 110. Embodiments of the disclosure are not limited in this regard.

In an embodiment, the communication system 100 may further include other network entities such as a mobility management entity (MME) and an access and mobility management function (AMF), and embodiments of the disclosure are not limited in this regard.

The network device may further include an access-network device and a core-network device, that is, the wireless communication system may further include multiple core-networks capable of communicating with the access-network device. The access-network device may be an evolutional node B (eNB or e-NodeB for short), a macro base station, a micro base station (also known as "small base station"), a pico base station, an AP, a transmission point (TP), or a new generation node B (gNodeB) in an LTE system, an NR system, or an authorized auxiliary access long-term evolution (LAA-LTE) system.

It may be understood that in embodiments of the disclosure, a device with communication functions in a network/system may be referred to as a "communication device". Taking the communication system illustrated in FIG. 1 as an example, the communication device may include the network device and the terminal device(s) that have communication functions. The network device and the terminal device(s) can be the devices in the embodiments of the disclosure, which will not be repeated herein. The communication device may further include other devices such as a network controller, a mobility management entity, or other network entities in the communication system, and embodiments of the disclosure are not limited in this regard.

It may be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It may be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association relationship between the two, or may mean a relationship of indicating and being indicated or configuring and being configured, etc.

For better understanding of technical solutions of embodiments of the disclosure, the related art of embodiments of the disclosure will be described below. The related art below, as an optional scheme, can be arbitrarily combined with the technical solutions of embodiments of the disclosure, which shall all belong to the protection scope of embodiments of the disclosure.

### I. Sidelink communication technology

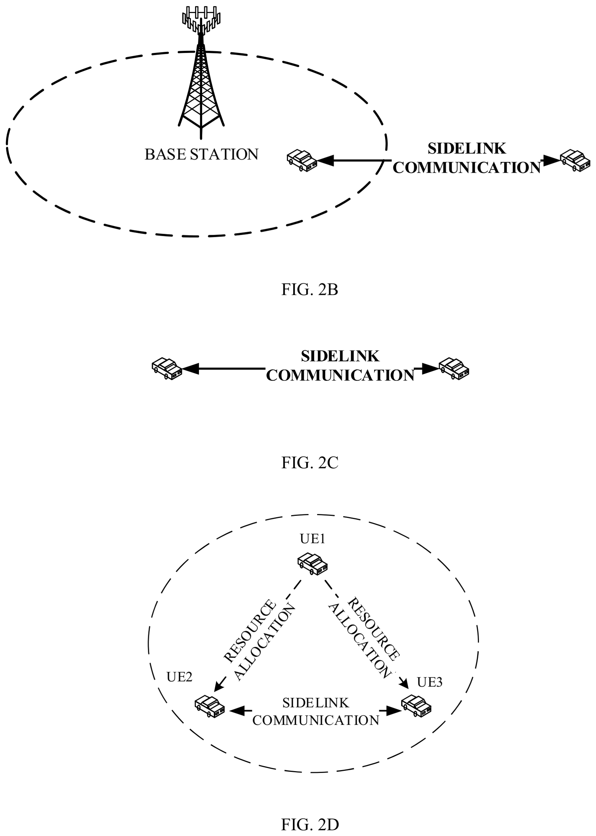

According to the network coverage condition of terminals in communication, the sidelink communication technology may be classified into in-coverage sidelink communication as illustrated in FIG. 2A, partial-coverage sidelink communication as illustrated in FIG. 2B, out-of-coverage sidelink communication as illustrated in FIG. 2C, and sidelink communication with the existence of a central control node as illustrated in FIG. 2D.

As illustrated in FIG. 2A, in in-coverage sidelink communication, all terminals in sidelink communication are located within a coverage of the same base station, so that all the terminals can receive configuration signaling from the base station and perform sidelink communication based on the same sidelink configuration.

As illustrated in FIG. 2B, in partial-coverage sidelink communication, some of terminals in sidelink communication are located within a coverage of a base station, and these terminals can receive configuration signaling from the base station and perform sidelink communication based on a configuration from the base station. However, a terminal(s) located out of a coverage of a network is unable to receive the configuration signaling from the base station. In this case, the terminal(s) out of the coverage of the network may determine an sidelink configuration according to pre-configuration information as well as information carried in a physical sidelink broadcast channel (PSBCH) transmitted by the terminal(s) located within the coverage of the network, and then perform sidelink communication.

As illustrated in FIG. 2C, in out-of-coverage sidelink communication, all terminals in sidelink communication are located out of a coverage of a network, and all the terminals may determine an sidelink configuration according to pre-configuration information and then perform sidelink communication.

As illustrated in FIG. 2D, in sidelink communication with a central control node, multiple terminals constitute a communication group, and the communication group includes a central control node, which may also be referred to as a cluster header (CH). The central control node has one of the following functions: being responsible for establishment of a communication group; adding a member(s) to the group and removing a member(s) from the group; performing resource coordination, such as allocating sidelink transmission resources to other terminals, and receiving sidelink feedback information from other terminals; communicating with other communication groups for resource coordination, or the like.

### II. D2D/V2X

D2D communication is a D2D-based sidelink (SL) transmission technology. Different from a traditional cellular system in which communication data is received or transmitted by a base station, a V2X system adopts D2D direct communication, thereby having higher spectral efficiency and lower transmission delay. Currently, two transmission modes are defined: mode 1 and mode 2.

Mode 1: a transmission resource(s) for a terminal is allocated by a base station, and the terminal performs data transmission on a sidelink on the resource(s) allocated by the base station. The base station may allocate to the terminal a resource(s) for single transmission, or may allocate to the terminal a resource(s) for semi-persistent transmission. As illustrated in FIG. 2A, the terminal is located within the coverage of the network, and the network allocates to the terminal a transmission resource(s) for sidelink transmission.

Mode 2: the terminal selects a resource(s) for data transmission from a resource pool. As illustrated in FIG. 2C, the terminal is located out of a coverage of a cell, and the terminal autonomously selects a transmission resource(s) for sidelink transmission from a pre-configured resource pool. Alternatively, as illustrated in FIG. 2A, the terminal autonomously selects a transmission resource(s) for sidelink transmission from a resource pool configured by the network.

### III. NR-V2X

In NR-V2X, automatic driving needs to be supported. Therefore, NR-V2X has higher requirements on data interaction between vehicles, such as higher throughput, lower delay, higher reliability, larger coverage, more flexible resource allocation, and the like.

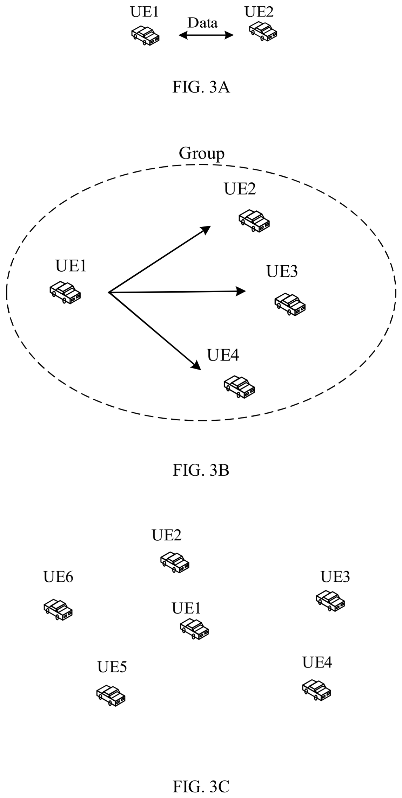

In LTE-V2X, a broadcast transmission mode is supported. In NR-V2X, a unicast transmission mode and a multicast transmission mode are introduced. In unicast transmission, only one terminal may serve as a receiving terminal. FIG. 3A is a schematic diagram illustrating unicast transmission in NR-V2X, and as illustrated in FIG. 3A, unicast transmission is performed between UE 1 and UE 2. In multicast transmission, all terminals in a communication group or all terminals within a certain transmission distance may serve as receiving terminals. FIG. 3B is a schematic diagram illustrating multicast transmission in NR-V2X, and as illustrated in FIG. 3B, UE 1, UE 2, UE 3, and UE 4 constitute a communication group, where UE 1 transmits data, and other terminal devices in the group all serve as receiving terminals. In the broadcast transmission mode, any one of terminals around a transmitting terminal may serve as a receiving terminal. FIG. 3C is a schematic diagram illustrating broadcast transmission in NR-V2X, and as illustrated in FIG. 3C, UE 1 serves as a transmitting terminal, and other terminals, i.e., UE 2 to UE 6, around UE 1 all serve as receiving terminals.

### IV. 5G unlicensed (license-free) spectrum communication NR-U

An NR system can achieve seamless coverage, high spectral efficiency, high peak rate, and high reliability of a cellular network. In an LTE system, an unlicensed spectrum (or a license-free spectrum) is used as a supplementary frequency band to a licensed spectrum for the cellular network. Similarly, the NR system may also use the unlicensed spectrum as part of the 5G cellular network technology to provide services to users. In the related standard, an NR-U system, called NR-unlicensed (NR-U), is discussed.

The NR-U system supports two networking modes: licensed-assisted access and standalone unlicensed access. In the former mode, a network is accessed by using the licensed spectrum, with the use of the unlicensed spectrum as a secondary carrier. In the latter mode, the unlicensed spectrum can be used for standalone networking, and a UE can directly access the network through the unlicensed spectrum.

The unlicensed spectrum is a spectrum specified by a country or region that can be used for radio device communication. This spectrum is generally regarded as a shared spectrum. that is, a communication device can use this spectrum without applying for exclusive spectrum authorization from a dedicated spectrum management authority of the country or region, as long as the communication device satisfies regulatory requirements set by the country or region on this spectrum. The use of the unlicensed spectrum needs to satisfy specific regulatory requirements of each country or region, for example, the communication device follows a "listen-before-talk (LBT)" principle to use the unlicensed spectrum. Therefore, the NR technology needs to be enhanced accordingly to adapt to the regulatory requirements on unlicensed frequency bands, while efficiently utilizing the unlicensed spectrum to provide services. In the related standard, the NR-U technology has been mainly standardized in aspects such as channel monitoring, initial access, channel design control, hybrid automatic repeat reQuest (HARQ) and scheduling, and configured grant transmission.

### V. Channel monitoring

To enable various communication systems, which use an unlicensed spectrum for wireless communication, to coexist in harmony in this spectrum, some countries or regions have stipulated regulatory requirements that needs to be satisfied during use of the unlicensed spectrum. For example, according to stipulations of some regions, during use of the unlicensed spectrum for communication, a communication device follows an "LBT" principle. That is, before transmitting a signal using a channel in the unlicensed spectrum, the communication device needs to first perform LBT (listen-before-talk or sensing-before-transmission) or channel monitoring. The communication device can transmit the signal on the channel only when a channel monitoring result indicates that the channel is idle or the LBT succeeds. If the channel monitoring result of the communication device for the channel indicates that the channel is busy or the LBT fails, the communication device is unable to transmit the signal on the channel. In addition, to ensure the fair use of spectrum resources in a shared spectrum, if a communication device succeeds in LBT on a channel in the unlicensed spectrum, a duration for which the communication device performs communication transmission using the channel cannot exceed a certain duration. By limiting the maximum communication duration after LBT succeeds, this mechanism ensures that different communications devices each have an opportunity to access the shared channel, so that different communications systems can coexist in harmony in the shared spectrum.

Since channel monitoring can provide benefits such as harmonious coexistence and avoiding communication transmission conflicts between communications systems operating in the shared spectrum, in the design of an NR-U system, channel monitoring is a feature that needs to be supported by a communications device in the system. From the perspective of network deployment of the system, there are two mechanisms for channel monitoring. One is LBT for a load based equipment (LBE), which is also referred to as dynamic channel monitoring or dynamic channel occupancy, and the other is LBT for a frame based equipment (FBE), which is also referred to as semi-static channel monitoring or semi-static channel occupancy.

### VI. Dynamic channel monitoring

Dynamic channel monitoring can also be regards as an LBE-based LBT mode. A principle of the channel monitoring is that a communications device performs LBT on a carrier in an unlicensed spectrum upon arrival of a service, and starts to transmit a signal on the carrier upon success of the LBT. The LBT mode for the dynamic channel monitoring includes a Type 1 channel access mode and a Type 2 channel access mode. The Type 1 channel access mode (also referred to as Type 1 LBT) refers to multi-slot channel detection with random back-off based on contention window (CW) size adjustment, in which a corresponding channel access priority class (CAPC) *p* may be selected according to a priority of a service to be transmitted. The Type 2 channel access mode (also referred to as Type 2 LBT) is a channel access mode based on a monitoring slot with a fixed length. The Type 2 channel access mode includes Type 2A channel access, Type 2B channel access, and Type 2C channel access. The Type 1 channel access mode is mainly used for a communication device to initiate channel occupancy, and the Type 2 channel access mode is mainly used for the communication device to share the channel occupancy.

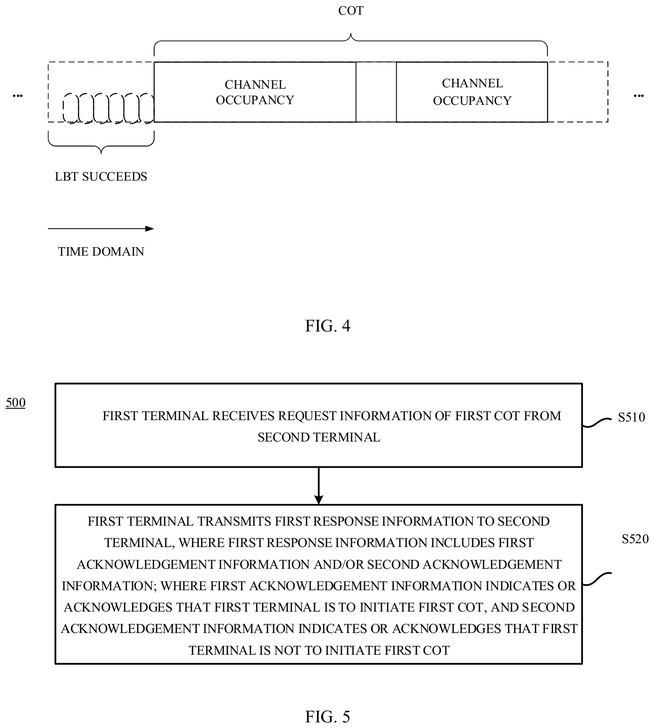

FIG. 4 is a schematic diagram illustrating channel occupancy time (COT) obtained by a communication device after succeeding in LBT on a channel in an unlicensed spectrum, and signal transmission by the communication device using resources in the COT.

### VI. Default channel access mode at a base station side: Type 1 channel access

Taking a base station as an example, channel access parameters corresponding to channel access priority classes *p* at the base station side are illustrated in Table 1. In Table 1, *mp* refers to the number of back-off slots corresponding to the channel access priority class *p, CWp* refers to a CW size corresponding to the channel access priority class *p, CWmin,p* refers to the minimum value of *CWp* corresponding to the channel access priority class *p, CWmax,p* refers to the maximum value of *CWp* corresponding to the channel access priority class *p,* and *Tmcot,p* refers to a COT length corresponding to the channel access priority class *p*.

If channel access ends, the base station can transmit a to-be-transmitted service using the channel. The maximum time length for which the base station can use the channel for transmission cannot exceed *Tmcot,p.*

**Table 1 - Channel access parameters corresponding to different channel access priority classes p**

| Channel access priority class (*p*) | *mₚ* | *CW_{min,p}* | *CW_{max,p}* | *T_{mcot,p}* | Allowed *CWₚ* sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

### VII. COT sharing at a base station side

After initiating COT, a base station not only can use resources in the COT for downlink transmission, but also can share the resources in the COT with a UE for uplink transmission. When the resources in the COT are shared with the UE for uplink transmission, a channel access mode that the UE can use is a Type 2 channel access mode, including Type 2A channel access, Type 2B channel access, or Type 2C channel access. The Type 2A channel access, Type 2B channel access, and Type 2C channel access are all channel access modes based on a monitoring slot with a fixed length.

In the related art, when terminals operate on a sidelink in a license-free frequency band, all the terminals need to perform different types of LBT before transmission of sidelink data, and can smoothly access a channel for sidelink transmission only in the case where LBT succeeds. When no COT exists, the terminals need to perform Type 1 LBT, and can initiate COT only after the Type 1 LBT succeeds. Other terminals satisfying a condition may also share resources in the COT, and adopt Type 2 LBT. In the related art, whether a terminal initiates COT is determined according to whether the terminal has data to be transmitted and whether Type 1 LBT succeeds, and it is not supported that a terminal requests another terminal to initiate COT for use by the terminal.

Currently, the standardization is being advanced regarding deployment of the SL technology in an unlicensed frequency band, i.e., a sidelink unlicensed (SL-U) technology. The SL-U technology can be deployed in commercial scenarios such as a wearable smart device, smart home, and industrial Internet. In the discussion on the topic of Rel-18 SL-U, all terminals have the same capability, and a reduced-capability (RedCap) UE is not taken into consideration, However, the cost and power consumption of a terminal device are important measurement indicators in the commercial deployment. The low cost and low power consumption brought by a low-capability UE or a RedCap UE can facilitate commercialization of the SL-U technology. From the perspective of low power consumption, how to achieve energy saving at an SL-U RedCap UE is a problem to be studied.

When an SL-U terminal operates in an unlicensed frequency band, the terminal first needs to perform LBT before data transmission. When the terminal performs Type 1 channel access, the terminal first needs to determine a value of a random back-off counter *N,* where the value of *N* is a random value in *CWp.* For example, when a CAPC is 4 and a value of *CWp* is 1023, assuming that the value of *N* is 1000, then at least 9079 microseconds (µs) (Td+N*Ts1 = Tf + mp*Ts1 + N*Ts1 = 16 + 7*9 + 1000*9 =9079 µs) is required to perform Type 1 channel access by the terminal. In other words, to access a channel, a RedCap UE needs to contiguously perform channel sensing for at least 9 milliseconds (ms), which leads to high power consumption. Therefore, how to achieve energy saving during channel access is a problem to be studied.

A communication method is provided in embodiments of the disclosure. FIG. 5 is a schematic flowchart of a communication method 500 according to embodiments of the disclosure. The method can be applied to the system illustrated in FIGs. 1 to 4, but is not limited thereto. The method includes at least part of the following.

At S510, a first terminal receives request information of first COT from a second terminal.

At S520, the first terminal transmits first response information to the second terminal, where the first response information includes first acknowledgement information and/or second acknowledgement information. The first acknowledgement information indicates or acknowledges that the first terminal is to initiate the first COT (or will initiate the first COT), and the second acknowledgement information indicates or acknowledges that the first terminal is not to initiate the first COT.

In some embodiments, the second terminal may be a RedCap UE.

In some embodiments, the first terminal may be a normal-capability UE or a non-RedCap UE. The first terminal may satisfy a first condition. The first condition includes at least one of the following: the first terminal is a target receiving terminal of sidelink information transmitted by the second terminal; the first terminal is a normal-capability UE or a non-RedCap UE; the first terminal has a capability of Type 1 LBT; or the first terminal has a capability of sidelink sensing.

In an example, the sidelink information transmitted by the second terminal may include at least one of a physical sidelink control channel (PSCCH), a physical sidelink shared channel (PSSCH), a physical sidelink feedback channel (PSFCH), or a sidelink synchronization signal block (S-SSB). The S-SSB may include at least one of a sidelink primary synchronization signal (S-PSS), a sidelink secondary synchronization signal (S-SSS), or a PSBCH. That is, the first terminal may be a target receiving terminal of information such as a PSCCH, a PSSCH, a PSFCH, and an S-SSB (including an S-PSS, an S-SSS and a PSBCH) transmitted by the second terminal.

In an example, the first terminal transmits the first response information in a first time range. For example, when a moment at which the second terminal transmits the request information of the first COT is T1, the first terminal transmits the first response information in a time range of [T1+t1, T1+t2]. Alternatively, when a moment at which the first terminal receives the request information of the first COT is T2, the first terminal transmits the first response information in a time range of [T2+t3, T2+t4]. Herein, t1, t2, t3, and t4 are preset values. The first terminal transmits the first response information in the first time range, which can facilitate reception of the first response information by the second terminal.

In the above manner, after the first terminal receives the request information of the first COT from the second terminal (such as a RedCap UE), the first terminal may initiate COT (such as the above first COT) for use by another terminal at least including the second terminal. As such, a terminal can request another terminal to initiate COT for use by the terminal. According to the manner provided in embodiments of the disclosure, since a normal-capability UE initiates, according to a request from a RedCap UE, COT for use by another terminal including the RedCap UE, the RedCap UE may not need to initiate Type 1 LBT, thereby avoiding a lot of power consumption generated by the RedCap UE due to the Type 1 LBT.

In some embodiments, the first COT to be initiated by the first terminal may satisfy a second condition, and the second condition mainly includes constraints on time-domain start time, a priority CAPC, and a time-domain resource(s) and a frequency-domain resource(s) occupied by the first COT. For example, the second condition includes at least one of the following: the first COT contains at least one of one or more time-domain resources indicated or reserved by the second terminal; the first COT contains a resource block (RB) set to which a frequency-domain resource occupied by the request information of the first COT belongs; the first COT contains a first frequency-domain resource or a first frequency-domain resource set indicated or reserved by the second terminal; the first COT contains an RB set to which the first frequency-domain resource belongs or an RB set to which the first frequency-domain resource set belongs; time-domain start time of the first COT is not later than a first moment; the time-domain start time of the first COT is not later than a second moment, where the second moment includes time-domain start time of the one or more time-domain resources indicated or reserved by the second terminal; or a CAPC level of the first COT is not higher than a CAPC level indicated in the request information of the first COT.

In an example, the one or more time-domain resources indicated or reserved by the second terminal include a sidelink slot.

In an example, the one or more time-domain resources indicated or reserved by the second terminal are indicated or reserved via at least one of: the request information of the first COT; or first sidelink information.

In an example, the first frequency-domain resource or the first frequency-domain resource set indicated or reserved by the second terminal may be indicated or reserved via at least one of: the request information of the first COT; or first sidelink information.

The one or more time-domain resources indicated or reserved by the second terminal and the first frequency-domain resource or the first frequency-domain resource set indicated or reserved by the second terminal can be occupied by the second terminal when transmitting the sidelink information.

In an example, the first moment may be indicated or reserved via at least one of: the request information of the first COT; or first sidelink information.

In the above contents, the first sidelink information may include at least one of a PSCCH, a PSSCH, a PSFCH, or a media access control control-element (MAC CE).

In some embodiments, after transmitting the first response information, the first terminal may perform Type 1 LBT. In an example, the first terminal determines a third moment, and the first terminal starts to perform the Type 1 LBT at the third moment.

Herein, a moment (i.e., the third moment) at which the Type 1 LBT starts to be performed may be determined by the first terminal itself based on implementation.

Alternatively, a moment (i.e., the above third moment) at which the Type 1 LBT starts to be performed may be earlier than time-domain start time of the first COT.

In the above example, the frequency-domain resource may include a license-free frequency-domain resource.

In some embodiments, after the first terminal transmits the first response information to the second terminal, the method further includes the following. The first terminal initiates the first COT. The first COT can be intended for use by the second terminal and/or another terminal. In an example, when initiating the first COT, the first terminal may carry COT indication information. The COT indication information includes at least one of: a time-domain resource of the first COT; a frequency-domain resource set of the first COT; time-domain start time of the first COT; or a CAPC level of the first COT.

According to the COT indication information, the second terminal (such as a RedCap UE) and/or another terminal can use the first COT, and thus the RedCap UE does not need to initiate Type 1 LBT, thereby avoiding a lot of power consumption generated by the RedCap UE due to the Type 1 LBT.

Embodiments of the disclosure will be described in detail below with reference to the accompanying drawings.

### First embodiment

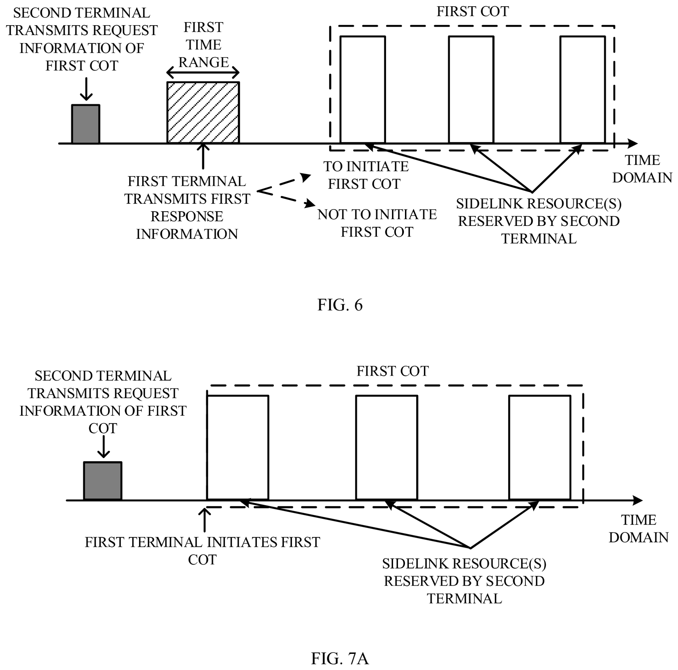

FIG. 6 is a schematic diagram of a first embodiment of the disclosure. As illustrated in FIG. 6, after receiving request information of first COT from a second terminal, a first terminal transmits first response information in a first time range. The first response information includes first acknowledgement information or second acknowledgement information. The first acknowledgement information may indicate/acknowledge that the first terminal is to initiate the first COT (or will initiate the first COT), and the second acknowledgement information may indicate/acknowledge that the first terminal is not to initiate the first COT.

For example, a moment at which the second terminal transmits the request information of the first COT is denoted by T1, and the first terminal may transmit the first response information in a time range of [T1+t1, T1+t2]. Alternatively, a moment at which the first terminal receives the request information of the first COT is denoted by T2, and the first terminal transmits the first response information in a time range of [T2+t3, T2+t4]. Herein, t1, t2, t3, and t4 are preset values. The first terminal transmits the first response information in the first time range, which can facilitate reception of the first response information by the second terminal.

After transmitting the first acknowledgement information (i.e., indicating/acknowledging that the first terminal is to initiate the first COT), the first terminal may initiate the first COT. In FIG. 6, in the time domain, the first COT initiated by the first terminal contains a sidelink resource(s) indicated/reserved by the second terminal.

In addition, in the frequency domain, the first COT initiated by the first terminal may contain an RB set to which a frequency-domain resource occupied by the request information of the first COT belongs, or contain a first frequency-domain resource/a first frequency-domain resource set indicated/reserved by the second terminal, or contain an RB set to which the first frequency-domain resource belongs or an RB set to which the first frequency-domain resource set belongs. A frequency-domain resource occupied by the first COT will be described in detail in the following embodiments with reference to the accompanying drawings.

### Second embodiment

In this embodiment, a start position and a duration of the first COT in the time domain are mainly introduced. The duration of the first COT initiated by the first terminal may at least contain at least one of a sidelink resource(s) reserved by the second terminal. The sidelink resource(s) may include a slot in a sidelink time-domain resource.

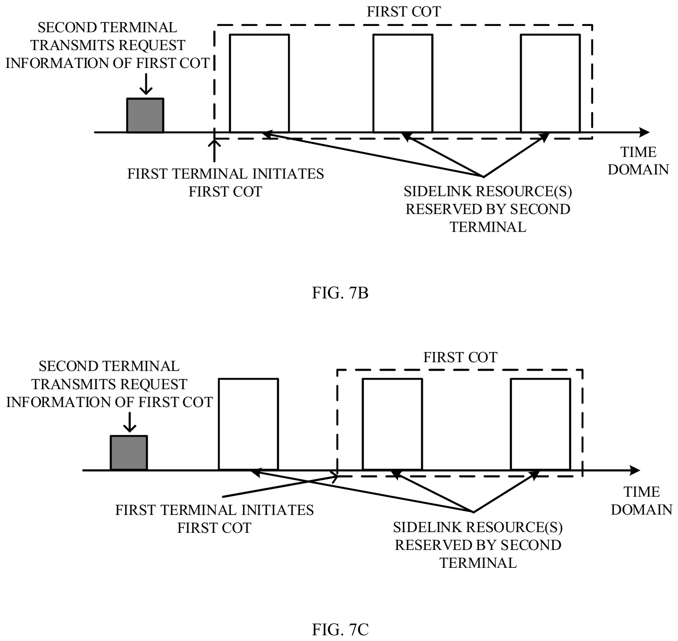

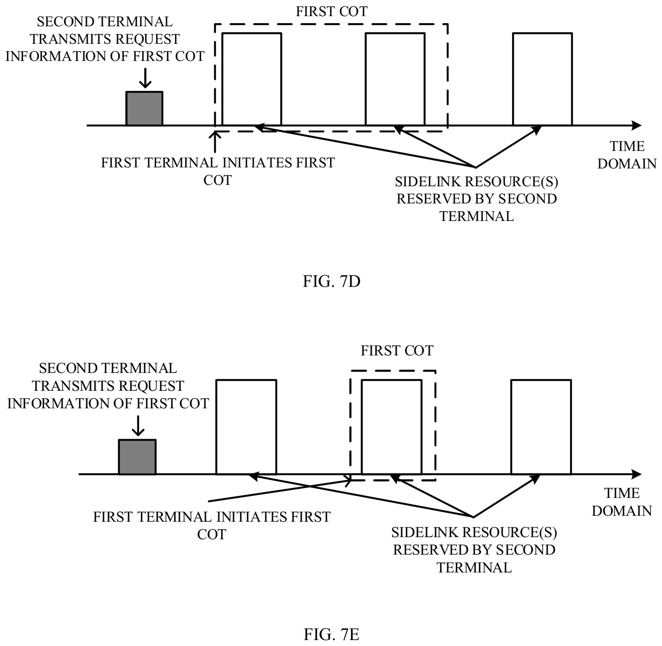

FIGs. 7A to 7E are schematic diagrams of a second embodiment of the disclosure. As illustrated in FIGs. 7A to 7E, the first COT initiated by the first terminal contains one or more of the sidelink resource(s) reserved by the second terminal. In FIGs. 7A to 7E, for the convenience of display, the first response information transmitted by the first terminal after receiving the request information of the first COT is not illustrated. Actually, in this embodiment, after receiving the request information of the first COT, the first terminal may transmit the first response information, and the first terminal initiates the first COT in the case where the first response information is the first acknowledgement information (i.e., indicating/acknowledging that the first terminal is to initiate the first COT). The first COT at least contains at least one of the sidelink resource(s) reserved/indicated by the second terminal.

The sidelink resource(s) reserved/indicated by the second terminal may be indicated via the request information of the first COT, or may be indicated via sidelink information, for example, indicated via at least one of a PSCCH, a PSSCH, a PSFCH, or an MAC CE.

In addition, when the first terminal initiates the first COT, a CAPC level of the first COT may be not higher than a CAPC level indicated in the request information of the first COT. That is to say, the CAPC level of the first COT is equal to or lower than a CAPC level of data to be transmitted by the second terminal, so that the second terminal can use the first COT to transmit the data.

In an example, when initiating the first COT, the first terminal may carry COT indication information, so that the second terminal and/or another terminal can use the first COT. The COT indication information may include at least one of a time-domain resource of the first COT, a frequency-domain resource set of the first COT, time-domain start time of the first COT, or a CAPC level of the first COT. According to the COT indication information, the second terminal and/or another terminal can know a time-domain position and a frequency-domain position of the first COT and a corresponding CAPC level, so as to use the first COT.

For example, in terms of using the first COT, a terminal determines whether a CAPC level of a service of the terminal is higher than or equal to a CAPC level of the first COT, and the terminal can use the first COT if the CAPC level of the service of the terminal is higher than or equal to the CAPC level of the first COT. For example, a CAPC level includes five levels 0, 1, 2, 3, 4, and 5, and the smaller the value, the higher the level. If the CAPC level of the first COT is equal to 2, and a CAPC level of data that needs to be transmitted by terminal A is equal to 1, then terminal A can use the first COT to transmit the data. For another example, if the CAPC level of the first COT is equal to 2, and a CAPC level of data that needs to be transmitted by terminal B is equal to 5, then terminal B is unable to use the first COT to transmit the data.

### Third embodiment

In this embodiment, a position of the first COT in the frequency domain is mainly introduced.

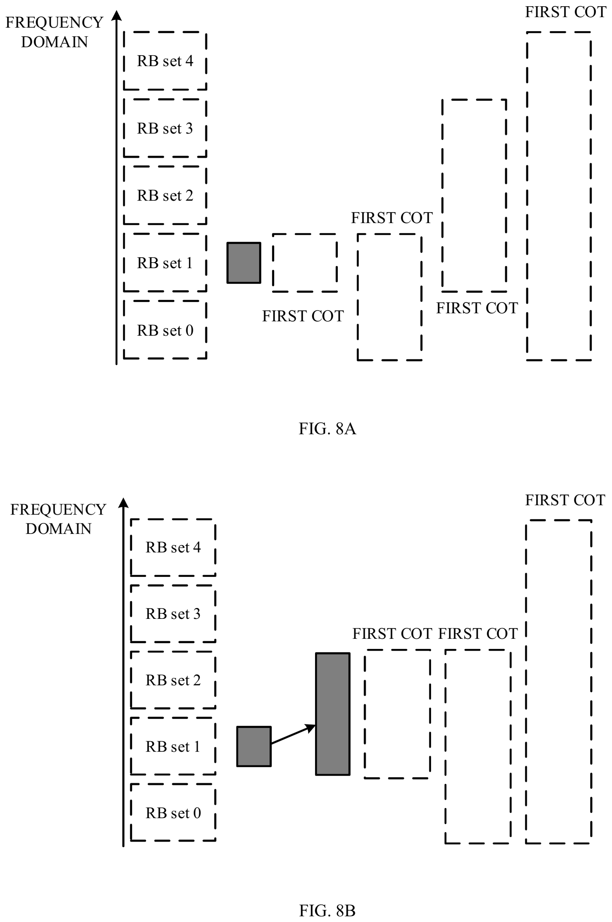

FIG. 8A is a first schematic diagram of a third embodiment of the disclosure. In an example illustrated in FIG. 8A, in the frequency domain, the first COT contains a sidelink resource(s) occupied by the second terminal when transmitting the request information of the first COT. As illustrated in FIG. 8A, in the case where the sidelink resource(s) occupied by the second terminal when transmitting the request information of the first COT belongs to RB set 1, the first COT initiated by the first terminal needs to at least contain RB set 1.

FIG. 8B is a second schematic diagram of a third embodiment of the disclosure. In an example illustrated in FIG. 8B, in the frequency domain, the first COT contains a sidelink resource(s) reserved/indicated by the second terminal, or contains an RB set occupied by the sidelink resource(s) reserved/indicated by the second terminal. As illustrated in FIG. 8B, the second terminal transmits the request information of the first COT on RB set 1, and a sidelink resource(s) reserved/indicated by the request information of the first COT occupies part or all of sidelink resources in RB set 1 and RB set 2. In this case, when the first terminal initiates the first COT, the first COT may contain RB set 1 and/or RB set 2.

In the example illustrated in FIG. 8B, the sidelink resource(s) reserved/indicated by the second terminal is indicated via the request information of the first COT. In another example, the sidelink resource(s) may also be indicated/reserved by the second terminal via sidelink information, for example, indicated or reserved via at least one of a PSCCH, a PSSCH, a PSFCH, or an MAC CE.

In addition, when the first terminal initiates the first COT, a CAPC level of the first COT may be not higher than a CAPC level indicated in the request information of the first COT. That is to say, the CAPC level of the first COT is equal to or lower than a CAPC level of data to be transmitted by the second terminal, so that the second terminal can use the first COT to transmit the data.

In an example, when initiating the first COT, the first terminal may carry COT indication information, so that the second terminal and/or another terminal can use the first COT. The COT indication information may include at least one of a time-domain resource of the first COT, a frequency-domain resource set of the first COT, time-domain start time of the first COT, or a CAPC level of the first COT.

### Fourth embodiment

In this embodiment, a start position of the first COT in the time domain, i.e., time-domain start time of the first COT, is mainly introduced.

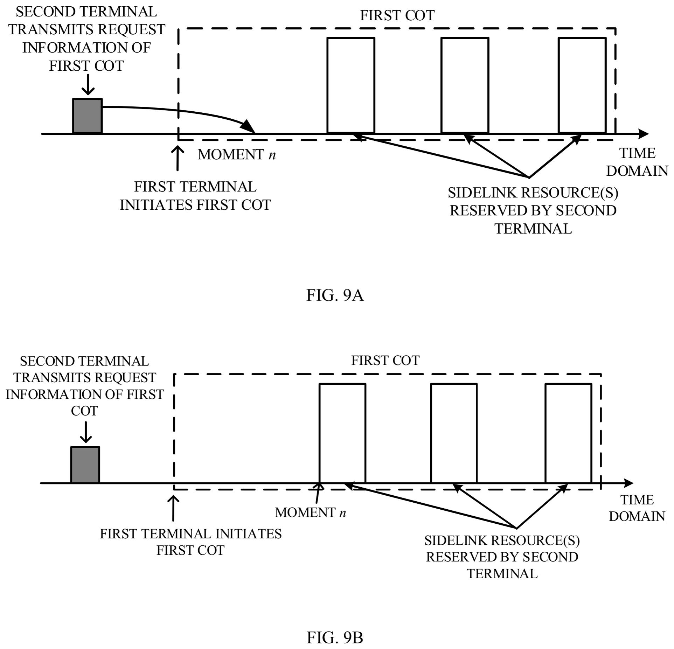

In an example, the second terminal may indicate or reserve a moment, and in this case, the first terminal initiates the first COT no later than the moment. As illustrated in FIG. 9A, in this example, a moment n is indicated in the request information of the first COT transmitted by the second terminal, and in this case, time-domain start time of initiating the first COT by the first terminal cannot be later than the moment *n*. In addition, the second terminal may also indicate the moment *n* via sidelink information, for example, via at least one of a PSCCH, a PSSCH, a PSFCH, or an MAC CE. In this example, the second terminal indicates/reserves the moment *n* in a manner of explicit indication.

In an example, the second terminal may indicate or reserve the moment n in a manner of implicit indication. For example, the second terminal indicates/reserves one or more time-domain resources via the request information of the first COT or sidelink information, time-domain start time of the one or more time-domain resources may be regarded as the moment *n*, and in this case, time-domain start time of initiating the first COT by the first terminal cannot be later than the time-domain start time of the one or more time-domain resources. As illustrated in FIG. 9B, in this example, a sidelink resource(s) is reserved in the request information of the first COT transmitted by the second terminal, and in this case, the time-domain start time of initiating the first COT by the first terminal cannot be later than time-domain start time of the sidelink resource(s) reserved by the second terminal.

In addition, when the first terminal initiates the first COT, a CAPC level of the first COT may be not higher than a CAPC level indicated in the request information of the first COT. That is to say, the CAPC level of the first COT is equal to or lower than a CAPC level of data to be transmitted by the second terminal, so that the second terminal can use the first COT to transmit the data.

In an example, when initiating the first COT, the first terminal may carry COT indication information, so that the second terminal and/or another terminal can use the first COT. The COT indication information may include at least one of a time-domain resource of the first COT, a frequency-domain resource set of the first COT, time-domain start time of the first COT, or a CAPC level of the first COT.

In the above embodiments, the first terminal may include a normal-capability UE or a non-RedCap UE, and the second terminal may include a RedCap UE. The first COT initiated by the first terminal can be intended for use by the second terminal and/or another terminal.

The above embodiments are not independent of each other, and the contents of different embodiments may be combined with each other. The specific combinations will not be repeated herein.

In a method for initiating COT provided in embodiments of the disclosure, after a first terminal receives request information of first COT from a second terminal, the first terminal may initiate COT for use by another terminal at least including the second terminal (a RedCap UE). The COT initiated by the first terminal satisfies a certain condition in aspects such as a time-domain resource(s), a frequency-domain resource(s), time-domain start time, and a CAPC level occupied. In addition, when initiating the first COT, the first terminal may carry COT indication information, which can facilitate use of the COT by the second terminal and/or another terminal. Therefore, the RedCap UE does not need to initiate Type 1 LBT, thereby avoiding a lot of power consumption generated by the RedCap UE due to the Type 1 LBT.

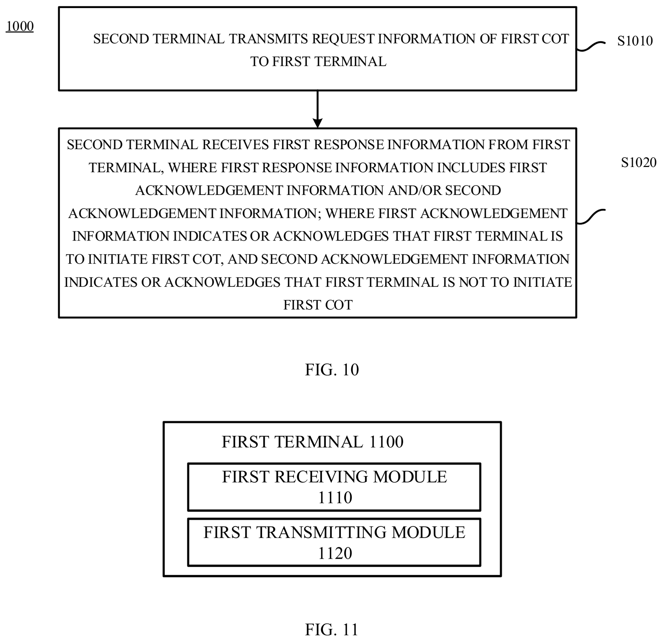

A communication method is further provided in embodiments of the disclosure. FIG. 10 is a schematic flowchart of a communication method 1000 according to embodiments of the disclosure. The method can be applied to the system illustrated in FIGs. 1 to 4, but is not limited thereto. The method includes at least part of the following.

At S1010, a second terminal transmits request information of first COT to a first terminal.

At S1020, the second terminal receives first response information from the first terminal, where the first response information includes first acknowledgement information and/or second acknowledgement information. The first acknowledgement information indicates or acknowledges that the first terminal is to initiate the first COT, and the second acknowledgement information indicates or acknowledges that the first terminal is not to initiate the first COT.

In some embodiments, the second terminal includes a RedCap UE.

In some embodiments, the first terminal satisfies a first condition. The first condition includes at least one of the following: the first terminal is a target receiving terminal of sidelink information transmitted by the second terminal; the first terminal is a normal-capability UE or a non-RedCap UE; the first terminal has a capability of Type 1 LBT; or the first terminal has a capability of sidelink sensing.

In such a manner, a RedCap UE can request a normal-capability UE or a non-RedCap UE to initiate COT for use by the RedCap UE or another terminal. Therefore, the RedCap UE does not need to initiate Type 1 LBT, thereby avoiding a lot of power consumption generated by the RedCap UE due to the Type 1 LBT.

In some embodiments, the sidelink information transmitted by the second terminal includes at least one of a PSCCH, a PSSCH, a PSFCH, or an S-SSB.

In some embodiments, the S-SSB includes at least one of an S-PSS, an S-SSS, or a PSBCH.

In some embodiments, the first COT satisfies a second condition. The second condition includes at least one of the following: the first COT contains at least one of one or more time-domain resources indicated or reserved by the second terminal; the first COT contains an RB set to which a frequency-domain resource occupied by the request information of the first COT belongs; the first COT contains a first frequency-domain resource or a first frequency-domain resource set indicated or reserved by the second terminal; the first COT contains an RB set to which the first frequency-domain resource belongs or an RB set to which the first frequency-domain resource set belongs; time-domain start time of the first COT is not later than a first moment; the time-domain start time of the first COT is not later than a second moment, where the second moment includes time-domain start time of the one or more time-domain resources indicated or reserved by the second terminal; or a CAPC level of the first COT is not higher than a CAPC level indicated in the request information of the first COT.

The first COT initiated by the first terminal may satisfy a certain condition in aspects such as a time-domain resource(s), a frequency-domain resource(s), time-domain start time, and a CAPC level occupied, which can facilitate use of the first COT by the second terminal and/or another terminal.

In some embodiments, the one or more time-domain resources include a sidelink slot.

In some embodiments, the one or more time-domain resources are indicated or reserved via at least one of: the request information of the first COT; or first sidelink information.

In some embodiments, the first frequency-domain resource or the first frequency-domain resource set is indicated or reserved via at least one of: the request information of the first COT; or first sidelink information.

In some embodiments, the first moment is indicated or reserved via at least one of: the request information of the first COT; or first sidelink information.

In some embodiments, the first sidelink information includes at least one of a PSCCH, a PSSCH, a PSFCH, or an MAC CE.

In some embodiments, the method further includes the following. The second terminal performs LBT in the first COT.

In some embodiments, the first COT is intended for use by the second terminal and/or another terminal.

A first terminal is further provided in embodiments of the disclosure. FIG. 11 is a schematic structural diagram of a first terminal 1100 according to embodiments of the disclosure. The first terminal 1100 includes a first receiving module 1110 and a first transmitting module 1120. The first receiving module 1110 is configured to receive request information of first COT from a second terminal. The first transmitting module 1120 is configured to transmit first response information to the second terminal, where the first response information includes first acknowledgement information and/or second acknowledgement information. The first acknowledgement information indicates or acknowledges that the first terminal is to initiate the first COT, and the second acknowledgement information indicates or acknowledges that the first terminal is not to initiate the first COT.

In some embodiments, the first terminal satisfies a first condition. The first condition includes at least one of the following: the first terminal is a target receiving terminal of sidelink information transmitted by the second terminal; the first terminal is a normal-capability UE or a non-RedCap UE; the first terminal has a capability of Type 1 LBT; or the first terminal has a capability of sidelink sensing.

In some embodiments, the sidelink information transmitted by the second terminal may include at least one of a PSCCH, a PSSCH, a PSFCH, or an S-SSB.

In some embodiments, the S-SSB includes at least one of an S-PSS, an S-SSS, or a PSBCH.

In some embodiments, the first COT satisfies a second condition. The second condition includes at least one of the following: the first COT contains at least one of one or more time-domain resources indicated or reserved by the second terminal; the first COT contains an RB set to which a frequency-domain resource occupied by the request information of the first COT belongs; the first COT contains a first frequency-domain resource or a first frequency-domain resource set indicated or reserved by the second terminal; the first COT contains an RB set to which the first frequency-domain resource belongs or an RB set to which the first frequency-domain resource set belongs; time-domain start time of the first COT is not later than a first moment; the time-domain start time of the first COT is not later than a second moment, where the second moment includes time-domain start time of the one or more time-domain resources indicated or reserved by the second terminal; or a CAPC level of the first COT is not higher than a CAPC level indicated in the request information of the first COT.

In some embodiments, the one or more time-domain resources include a sidelink slot.

In some embodiments, the one or more time-domain resources are indicated or reserved via at least one of: the request information of the first COT; or first sidelink information.

In some embodiments, the first frequency-domain resource or the first frequency-domain resource set is indicated or reserved via at least one of: the request information of the first COT; or first sidelink information.

In some embodiments, the first moment is indicated or reserved via at least one of: the request information of the first COT; or first sidelink information.

In some embodiments, the first sidelink information includes at least one of a PSCCH, a PSSCH, a PSFCH, or an MAC CE.

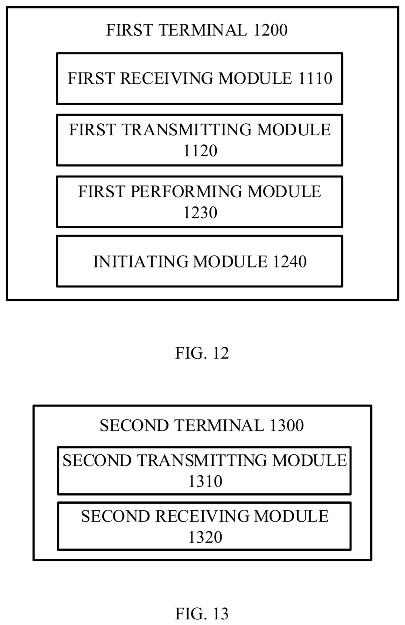

FIG. 12 is a schematic structural diagram of a first terminal 1200 according to embodiments of the disclosure. The first terminal 1200 includes one or more features of the embodiments of the first terminal 1200 above. In a possible embodiment, in embodiments of the disclosure, the first terminal 1200 further includes a first performing module 1230. The first performing module 1230 is configured to perform Type 1 LBT.

In some embodiments, the first performing module 1230 is configured to determine a third moment, and start to perform the Type 1 LBT at the third moment.

In some embodiments, the third moment is earlier than time-domain start time of the first COT.

In some embodiments, the first terminal 1200 further includes an initiating module 1240. The initiating module 1240 is configured to initiate the first COT.

In some embodiments, the initiating module 1240 is configured to carry COT indication information when initiating the first COT. The COT indication information includes at least one of: a time-domain resource of the first COT; a frequency-domain resource set of the first COT; time-domain start time of the first COT; or a CAPC level of the first COT.

In some embodiments, the first COT is intended for use by the second terminal and/or another terminal.

In some embodiments, the second terminal includes a RedCap UE.

It may be understood that, the above and other operations and/or functions of various modules in the first terminal according to embodiments of the disclosure are respectively intended for implementing corresponding procedures of the first terminal in the method 500 illustrated in FIG. 5, which will not be repeated herein for the sake of simplicity.

A second terminal is further provided in embodiments of the disclosure. FIG. 13 is a schematic structural diagram of a second terminal 1300 according to embodiments of the disclosure. The second terminal 1300 includes a second transmitting module 1310 and a second receiving module 1320. The second transmitting module 1310 is configured to transmit request information of first COT to a first terminal. The second receiving module 1320 is configured to receive first response information from the first terminal, where the first response information includes first acknowledgement information and/or second acknowledgement information. The first acknowledgement information indicates or acknowledges that the first terminal is to initiate the first COT, and the second acknowledgement information indicates or acknowledges that the first terminal is not to initiate the first COT.

In some embodiments, the second terminal includes a RedCap UE.

In some embodiments, the first terminal satisfies a first condition. The first condition includes at least one of the following: the first terminal is a target receiving terminal of sidelink information transmitted by the second terminal; the first terminal is a normal-capability UE or a non-RedCap UE; the first terminal has a capability of Type 1 LBT; or the first terminal has a capability of sidelink sensing.

In some embodiments, the sidelink information transmitted by the second terminal includes at least one of a PSCCH, a PSSCH, a PSFCH, or an S-SSB.

In some embodiments, the S-SSB includes at least one of an S-PSS, an S-SSS, or a PSBCH.

In some embodiments, the first COT satisfies a second condition. The second condition includes at least one of the following: the first COT contains at least one of one or more time-domain resources indicated or reserved by the second terminal; the first COT contains an RB set to which a frequency-domain resource occupied by the request information of the first COT belongs; the first COT contains a first frequency-domain resource or a first frequency-domain resource set indicated or reserved by the second terminal; the first COT contains an RB set to which the first frequency-domain resource belongs or an RB set to which the first frequency-domain resource set belongs; time-domain start time of the first COT is not later than a first moment; the time-domain start time of the first COT is not later than a second moment, where the second moment includes time-domain start time of the one or more time-domain resources indicated or reserved by the second terminal; or a CAPC level of the first COT is not higher than a CAPC level indicated in the request information of the first COT.

In some embodiments, the one or more time-domain resources include a sidelink slot.

In some embodiments, the one or more time-domain resources are indicated or reserved via at least one of: the request information of the first COT; or first sidelink information.

In some embodiments, the first frequency-domain resource or the first frequency-domain resource set is indicated or reserved via at least one of: the request information of the first COT; or first sidelink information.

In some embodiments, the first moment is indicated or reserved via at least one of: the request information of the first COT; or first sidelink information.

In some embodiments, the first sidelink information includes at least one of a PSCCH, a PSSCH, a PSFCH, or an MAC CE.

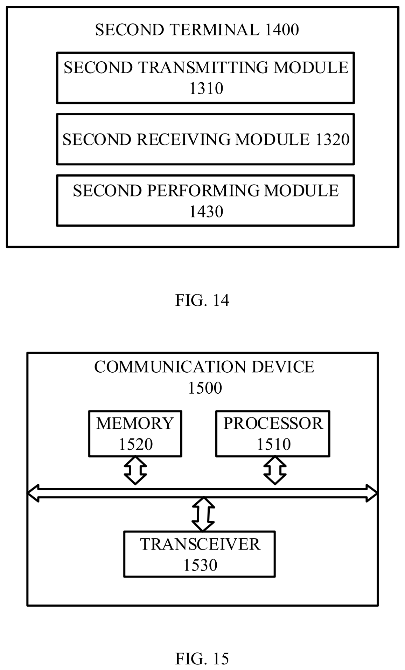

FIG. 14 is a schematic structural diagram of a second terminal 1400 according to embodiments of the disclosure. The second terminal 1400 includes one or more features of the embodiments of the second terminal 1300 above. In a possible embodiment, in embodiments of the disclosure, the second terminal 1400 further includes a second performing module 1430. The second performing module 1430 is configured to perform LBT in the first COT.

In some embodiments, the first COT is intended for use by the second terminal and/or another terminal.

It may be understood that, the above and other operations and/or functions of various modules in the communication device according to embodiments of the disclosure are respectively intended for implementing corresponding procedures of the second terminal in the method 1000 illustrated in FIG. 10, which will not be repeated herein for the sake of simplicity.

It may be noted that, the functions of various modules (sub-modules, units, or assemblies, etc.) in the communication device described in embodiments of the disclosure may be implemented by different modules (sub-modules, units, or assemblies, etc.), or may be implemented by the same module (sub-module, unit, or assembly, etc.). For example, the first receiving module and the second receiving module may be different modules or may be the same module, both of which can implement the corresponding functions thereof in embodiments of the disclosure. In addition, the transmitting module and the receiving module in embodiments of the disclosure may be implemented by a transceiver of a device, and part or all of the other modules may be implemented by a processor of the device.

FIG. 15 is a schematic structural diagram of a communication device 1500 according to embodiments of the disclosure. The communication device 1500 illustrated in FIG. 15 includes a processor 1510. The processor 1510 may invoke and execute a computer program stored in a memory, to implement the method in embodiments of the disclosure.

In some embodiments, as illustrated in FIG. 15, the communication device 1500 may further include a memory 1520. The processor 1510 may invoke and execute a computer program stored in the memory 1520, to implement the communication device in embodiments of the disclosure.

The memory 1520 may be a separate device independent of the processor 1510, or may be integrated into the processor 1510.

In some embodiments, as illustrated in FIG. 15, the communication device 1500 may further include a transceiver 1530. The processor 1510 may control the transceiver 1530 to communicate with another device, and specifically, may transmit information or data to another device, or receive information or data from the another device.

The transceiver 1530 may include a transmitter and a receiver. The transceiver 1530 may further include an antenna, where one or more antennas may be provided.

In some embodiments, the communication device 1500 may be the communication device in embodiments of the disclosure, and the communication device 1500 may implement a corresponding procedure implemented by the communication device in the methods according to embodiments of the disclosure, which will not be repeated herein for the sake of simplicity.

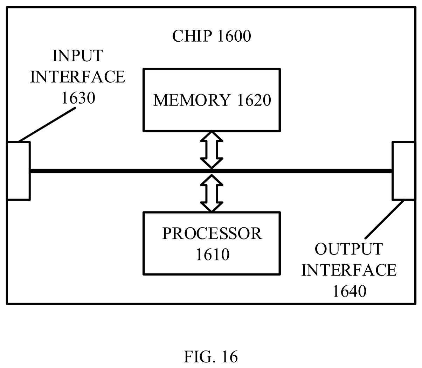

FIG. 16 is a schematic structural diagram of a chip 1600 according to embodiments of the disclosure. The chip 1600 illustrated in FIG. 16 includes a processor 1610. The processor 1610 may invoke and execute a computer program stored in a memory to implement the method in embodiments of the disclosure.

In some embodiments, as illustrated in FIG. 16, the chip 1600 may further include a memory 1620. The processor 1610 may invoke and execute a computer program stored in the memory 1620, to implement the method in embodiments of the disclosure.

The memory 1620 may be a separate device independent of the processor 1610, or may be integrated into the processor 1610.

In some embodiments, the chip 1600 may further include an input interface 1630. The processor 1610 may control the input interface 1630 to communicate with another device or chip, and specifically, may obtain information or data transmitted by the another device or chip.

In some embodiments, the chip 1600 may further include an output interface 1640. The processor 1610 may control the output interface 1640 to communicate with another device or chip, and specifically, may output information or data to the another device or chip.

In some embodiments, the chip may be applied to the communication device in embodiments of the disclosure, and the chip may implement corresponding procedures implemented by the network device in the methods according to embodiments of the disclosure, which will not be repeated herein for the sake of simplicity.

It may be understood that, the chip mentioned in embodiments of the disclosure may also be a system-on-chip (SoC).

The processor mentioned above may be a general-purpose processor, a digital signal processor (DSP), a field programmable gate array (FPGA), an application specific integrated circuit (ASIC), or another programmable logic device, a transistor logic device, a discrete hardware component, or the like. The general-purpose processor may be a microprocessor, or may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

All or part of the above embodiments can be implemented through software, hardware, firmware, or any other combination thereof. When implemented by software, all or part of the above embodiments can be implemented in the form of a computer program product. The computer program product includes one or more computer instructions. When the computer program instructions are applied and executed on a computer, all or part of the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It may be understood that in various embodiments of the disclosure, the magnitude of a sequence number of each of the above processes does not mean an execution order, and an execution order of each process can be determined according to a function and an internal logic of the process, which shall not constitute any limitation to an implementation process of embodiments of the disclosure.

It will be evident to those skilled in the art that, for the sake of convenience and simplicity, in terms of the specific working processes of the foregoing systems, apparatuses, and units, reference can be made to the corresponding processes in the above method embodiments, which will not be repeated herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
receiving, by a first terminal, request information of first channel occupancy time (COT) from a second terminal; and
transmitting, by the first terminal, first response information to the second terminal, wherein the first response information comprises first acknowledgement information and/or second acknowledgement information, wherein
the first acknowledgement information indicates or acknowledges that the first terminal is to initiate the first COT; and
the second acknowledgement information indicates or acknowledges that the first terminal is not to initiate the first COT.

2. The method of claim 1, wherein the first terminal satisfies a first condition, and the first condition comprises at least one of:
the first terminal being a target receiving terminal of sidelink information transmitted by the second terminal;
the first terminal being a normal-capability user equipment (UE) or a non-reduced-capability (non-RedCap) UE;
the first terminal having a capability of Type 1 listen-before-talk (LBT); or
the first terminal having a capability of sidelink sensing.

3. The method of claim 2, wherein the sidelink information transmitted by the second terminal comprises at least one of a physical sidelink control channel (PSCCH), a physical sidelink shared channel (PSSCH), a physical sidelink feedback channel (PSFCH), or a sidelink synchronization signal block (S-SSB).

4. The method of claim 3, wherein the S-SSB comprises at least one of a sidelink primary synchronization signal (S-PSS), a sidelink secondary synchronization signal (S-SSS), or a physical sidelink broadcast channel (PSBCH).

5. The method of any one of claims 1 to 4, wherein the first COT satisfies a second condition, and the second condition comprises at least one of:
the first COT containing at least one of one or more time-domain resources indicated or reserved by the second terminal;
the first COT containing a resource block (RB) set to which a frequency-domain resource occupied by the request information of the first COT belongs;
the first COT containing a first frequency-domain resource or a first frequency-domain resource set indicated or reserved by the second terminal;
the first COT containing an RB set to which the first frequency-domain resource belongs or an RB set to which the first frequency-domain resource set belongs;
time-domain start time of the first COT being not later than a first moment;
the time-domain start time of the first COT being not later than a second moment, wherein the second moment comprises time-domain start time of the one or more time-domain resources indicated or reserved by the second terminal; or
a channel access priority class (CAPC) level of the first COT being not higher than a CAPC level indicated in the request information of the first COT.

6. The method of claim 5, wherein the one or more time-domain resources comprise a sidelink slot.

7. The method of claim 5, wherein the one or more time-domain resources are indicated or reserved via at least one of:
the request information of the first COT; or
first sidelink information.

8. The method of claim 5, wherein the first frequency-domain resource or the first frequency-domain resource set is indicated or reserved via at least one of:
the request information of the first COT; or
first sidelink information.

9. The method of claim 5, wherein the first moment is indicated or reserved via at least one of:
the request information of the first COT; or
first sidelink information.

10. The method of any one of claims 7 to 9, wherein the first sidelink information comprises at least one of a PSCCH, a PSSCH, a PSFCH, or a media access control control-element (MAC CE).

11. The method of any one of claims 1 to 10, further comprising:
performing, by the first terminal, Type 1 LBT.

12. The method of claim 11, wherein performing, by the first terminal, the Type 1 LBT comprises:
determining, by the first terminal, a third moment; and
starting to perform, by the first terminal, the Type 1 LBT at the third moment.

13. The method of claim 12, wherein the third moment is earlier than time-domain start time of the first COT.

14. The method of any one of claims 11 to 13, further comprising:
initiating, by the first terminal, the first COT.

15. The method of claim 14, further comprising:
carrying, by the first terminal, COT indication information in response to initiating the first COT, wherein the COT indication information comprises at least one of:
a time-domain resource of the first COT;
a frequency-domain resource set of the first COT;
time-domain start time of the first COT; or
a CAPC level of the first COT.

16. The method of any one of claims 1 to 15, wherein the first COT is intended for use by the second terminal and/or another terminal.

17. The method of any one of claims 1 to 16, wherein the second terminal comprises a RedCap UE.

18. A communication method, comprising:
transmitting, by a second terminal, request information of first channel occupancy time (COT) to a first terminal; and
receiving, by the second terminal, first response information from the first terminal, wherein the first response information comprises first acknowledgement information and/or second acknowledgement information, wherein
the first acknowledgement information indicates or acknowledges that the first terminal is to initiate the first COT; and
the second acknowledgement information indicates or acknowledges that the first terminal is not to initiate the first COT.

19. The method of claim 18, wherein the second terminal comprises a reduced-capability (RedCap) UE.

20. The method of claim 18 or 19, wherein the first terminal satisfies a first condition, and the first condition comprises at least one of:
the first terminal being a target receiving terminal of sidelink information transmitted by the second terminal;
the first terminal being a normal-capability user equipment (UE) or a non-RedCap UE;
the first terminal having a capability of Type 1 listen-before-talk (LBT); or
the first terminal having a capability of sidelink sensing.

21. The method of claim 20, wherein the sidelink information transmitted by the second terminal comprises at least one of a physical sidelink control channel (PSCCH), a physical sidelink shared channel (PSSCH), a physical sidelink feedback channel (PSFCH), or a sidelink synchronization signal block (S-SSB).

22. The method of claim 21, wherein the S-SSB comprises at least one of a sidelink primary synchronization signal (S-PSS), a sidelink secondary synchronization signal (S-SSS), or a physical sidelink broadcast channel (PSBCH).

23. The method of any one of claims 18 to 22, wherein the first COT satisfies a second condition, and the second condition comprises at least one of:
the first COT containing at least one of one or more time-domain resources indicated or reserved by the second terminal;
the first COT containing a resource block (RB) set to which a frequency-domain resource occupied by the request information of the first COT belongs;
the first COT containing a first frequency-domain resource or a first frequency-domain resource set indicated or reserved by the second terminal;
the first COT containing an RB set to which the first frequency-domain resource belongs or an RB set to which the first frequency-domain resource set belongs;
time-domain start time of the first COT being not later than a first moment;
the time-domain start time of the first COT being not later than a second moment, wherein the second moment comprises time-domain start time of the one or more time-domain resources indicated or reserved by the second terminal; or
a channel access priority class (CAPC) level of the first COT being not higher than a CAPC level indicated in the request information of the first COT.

24. The method of claim 23, wherein the one or more time-domain resources comprise a sidelink slot.

25. The method of claim 23, wherein the one or more time-domain resources are indicated or reserved via at least one of:
the request information of the first COT; or
first sidelink information.

26. The method of claim 23, wherein the first frequency-domain resource or the first frequency-domain resource set is indicated or reserved via at least one of:
the request information of the first COT; or
first sidelink information.

27. The method of claim 23, wherein the first moment is indicated or reserved via at least one of:
the request information of the first COT; or
first sidelink information.

28. The method of any one of claims 25 to 27, wherein the first sidelink information comprises at least one of a PSCCH, a PSSCH, a PSFCH, or a media access control control-element (MAC CE).

29. The method of any one of claims 18 to 28, further comprising:
performing, by the second terminal, LBT in the first COT.

30. The method of any one of claims 18 to 29, wherein the first COT is intended for use by the second terminal and/or another terminal.

31. A first terminal, comprising:
a first receiving module configured to receive request information of first channel occupancy time (COT) from a second terminal; and
a first transmitting module configured to transmit first response information to the second terminal, wherein the first response information comprises first acknowledgement information and/or second acknowledgement information, wherein
the first acknowledgement information indicates or acknowledges that the first terminal is to initiate the first COT; and
the second acknowledgement information indicates or acknowledges that the first terminal is not to initiate the first COT.

32. The first terminal of claim 31, wherein the first terminal satisfies a first condition, and the first condition comprises at least one of:
the first terminal being a target receiving terminal of sidelink information transmitted by the second terminal;
the first terminal being a normal-capability user equipment (UE) or a non-reduced-capability (non-RedCap) UE;
the first terminal having a capability of Type 1 listen-before-talk (LBT); or
the first terminal having a capability of sidelink sensing.

33. The first terminal of claim 32, wherein the sidelink information transmitted by the second terminal comprises at least one of a physical sidelink control channel (PSCCH), a physical sidelink shared channel (PSSCH), a physical sidelink feedback channel (PSFCH), or a sidelink synchronization signal block (S-SSB).

34. The first terminal of claim 33, wherein the S-SSB comprises at least one of a sidelink primary synchronization signal (S-PSS), a sidelink secondary synchronization signal (S-SSS), or a physical sidelink broadcast channel (PSBCH).

35. The first terminal of any one of claims 31 to 34, wherein the first COT satisfies a second condition, and the second condition comprises at least one of:
the first COT containing at least one of one or more time-domain resources indicated or reserved by the second terminal;
the first COT containing a resource block (RB) set to which a frequency-domain resource occupied by the request information of the first COT belongs;
the first COT containing a first frequency-domain resource or a first frequency-domain resource set indicated or reserved by the second terminal;
the first COT containing an RB set to which the first frequency-domain resource belongs or an RB set to which the first frequency-domain resource set belongs;
time-domain start time of the first COT being not later than a first moment;
the time-domain start time of the first COT being not later than a second moment, wherein the second moment comprises time-domain start time of the one or more time-domain resources indicated or reserved by the second terminal; or
a channel access priority class (CAPC) level of the first COT being not higher than a CAPC level indicated in the request information of the first COT.

36. The first terminal of claim 35, wherein the one or more time-domain resources comprise a sidelink slot.

37. The first terminal of claim 35, wherein the one or more time-domain resources are indicated or reserved via at least one of:
the request information of the first COT; or
first sidelink information.

38. The first terminal of claim 35, wherein the first frequency-domain resource or the first frequency-domain resource set is indicated or reserved via at least one of:
the request information of the first COT; or
first sidelink information.

39. The first terminal of claim 35, wherein the first moment is indicated or reserved via at least one of:
the request information of the first COT; or
first sidelink information.

40. The first terminal of any one of claims 37 to 39, wherein the first sidelink information comprises at least one of a PSCCH, a PSSCH, a PSFCH, or a media access control control-element (MAC CE).

41. The first terminal of any one of claims 31 to 40, further comprising:
a first performing module configured to perform Type 1 LBT.

42. The first terminal of claim 41, wherein the first performing module is configured to:
determine a third moment; and
start to perform the Type 1 LBT at the third moment.

43. The first terminal of claim 42, wherein the third moment is earlier than time-domain start time of the first COT.

44. The first terminal of any one of claims 41 to 43, further comprising:
an initiating module configured to initiate the first COT.

45. The first terminal of claim 44, wherein the initiating module is configured to carry COT indication information in response to initiating the first COT, wherein the COT indication information comprises at least one of:
a time-domain resource of the first COT;
a frequency-domain resource set of the first COT;
time-domain start time of the first COT; or
a CAPC level of the first COT.

46. The first terminal of any one of claims 31 to 45, wherein the first COT is intended for use by the second terminal and/or another terminal.

47. The first terminal of any one of claims 31 to 46, wherein the second terminal comprises a RedCap UE.

48. A second terminal, comprising:
a second transmitting module configured to transmit request information of first channel occupancy time (COT) to a first terminal; and
a second receiving module configured to receive first response information from the first terminal, wherein the first response information comprises first acknowledgement information and/or second acknowledgement information, wherein
the first acknowledgement information indicates or acknowledges that the first terminal is to initiate the first COT; and
the second acknowledgement information indicates or acknowledges that the first terminal is not to initiate the first COT.

49. The second terminal of claim 48, wherein the second terminal comprises a reduced-capability (RedCap) UE.

50. The second terminal of claim 48 or 49, wherein the first terminal satisfies a first condition, and the first condition comprises at least one of:
the first terminal being a target receiving terminal of sidelink information transmitted by the second terminal;
the first terminal being a normal-capability user equipment (UE) or a non-RedCap UE;
the first terminal having a capability of Type 1 listen-before-talk (LBT); or
the first terminal having a capability of sidelink sensing.

51. The second terminal of claim 50, wherein the sidelink information transmitted by the second terminal comprises at least one of a physical sidelink control channel (PSCCH), a physical sidelink shared channel (PSSCH), a physical sidelink feedback channel (PSFCH), or a sidelink synchronization signal block (S-SSB).

52. The second terminal of claim 51, wherein the S-SSB comprises at least one of a sidelink primary synchronization signal (S-PSS), a sidelink secondary synchronization signal (S-SSS), or a physical sidelink broadcast channel (PSBCH).

53. The second terminal of any one of claims 48 to 52, wherein the first COT satisfies a second condition, and the second condition comprises at least one of:
the first COT containing at least one of one or more time-domain resources indicated or reserved by the second terminal;
the first COT containing a resource block (RB) set to which a frequency-domain resource occupied by the request information of the first COT belongs;
the first COT containing a first frequency-domain resource or a first frequency-domain resource set indicated or reserved by the second terminal;
the first COT containing an RB set to which the first frequency-domain resource belongs or an RB set to which the first frequency-domain resource set belongs;
time-domain start time of the first COT being not later than a first moment;
the time-domain start time of the first COT being not later than a second moment, wherein the second moment comprises time-domain start time of the one or more time-domain resources indicated or reserved by the second terminal; or
a channel access priority class (CAPC) level of the first COT being not higher than a CAPC level indicated in the request information of the first COT.

54. The second terminal of claim 53, wherein the one or more time-domain resources comprise a sidelink slot.

55. The second terminal of claim 53, wherein the one or more time-domain resources are indicated or reserved via at least one of:
the request information of the first COT; or
first sidelink information.

56. The second terminal of claim 53, wherein the first frequency-domain resource or the first frequency-domain resource set is indicated or reserved via at least one of:
the request information of the first COT; or
first sidelink information.

57. The second terminal of claim 53, wherein the first moment is indicated or reserved via at least one of:
the request information of the first COT; or
first sidelink information.

58. The second terminal of any one of claims 55 to 57, wherein the first sidelink information comprises at least one of a PSCCH, a PSSCH, a PSFCH, or a media access control control-element (MAC CE).

59. The second terminal of any one of claims 48 to 58, further comprising:
a second performing module configured to perform LBT in the first COT.

60. The second terminal of any one of claims 48 to 59, wherein the first COT is intended for use by the second terminal and/or another terminal.

61. A communication device, comprising a processor, a memory, and a transceiver, wherein the memory is configured to store a computer program, the processor is configured to invoke and execute the computer program stored in the memory and control the transceiver to perform the method of any one of claims 1 to 17 or the method of any one of claims 18 to 30.

62. A chip, comprising:
a processor configured to invoke and execute a computer program stored in a memory, to cause a device equipped with the chip to perform the method of any one of claims 1 to 17 or the method of any one of claims 18 to 30.

63. A computer-readable storage medium configured to store a computer program which causes a computer to perform the method of any one of claims 1 to 17 or the method of any one of claims 18 to 30.

64. A computer program product comprising computer program instructions which cause a computer to perform the method of any one of any one of claims 1 to 17 or the method of any one of claims 18 to 30.

65. A computer program causing a computer to perform the method of any one of claims 1 to 17 or the method of any one of claims 18 to 30.
